# EUROPEAN PATENT APPLICATION

(11) **EP 4 282 814 A1**
(43) Date of publication of application: **29.11.2023**
(21) Application number: 22742652.5
(22) Date of filing: 20.01.2022
(51) Int. Cl.: C01B 3/02, B01J 31/06, B01J 35/02, C01B 3/04, C01B 13/02

(54) **METHOD FOR PRODUCING OXYGEN AND HYDROGEN BY MEANS OF WATER DECOMPOSITION**

(30) Priority: 22.01.2021 JP 2021008650
(71) Applicant: International Frontier Technology Laboratory Inc., Tokyo 105-0001 (JP)
(72) Inventor: NISHIDE, Hiroyuki, Tokyo 169-8050 (JP); OKA, Kouki, Tokyo 169-8050 (JP)
(74) Representative: Ter Meer Steinmeister & Partner
(86) International application number: PCT/JP2022/002014
(87) International publication number: WO 2022/158530

(57) **Abstract**

To provide an oxygen and hydrogen production technology that is novel, convenient, and environmentally suitable, and decomposes water at a high rate. Based on the finding that an aromatic amine polymer acts as an oxidation catalyst that generates oxygen from water and a polyarylenevinylene acts as a reduction catalyst that generates hydrogen from water, oxygen and hydrogen are generated at a high rate by applying a slight overpotential relative to an equilibrium potential because these catalysts operate at a very low overpotential. Further, irradiation of the water-oxidation·oxygen-generation catalyst with light including solar light increases a production rate of oxygen and hydrogen. The aromatic amine polymer and the polyarylenevinylene are both aromatic polymers, are low cost, and have considerably high durability in water over a wide pH range and in addition, they may have hydrophilicity or hydrophobicity, interface area, and shape suited for electrode catalysts.

## Description

### Technical Field

The present invention relates to a method for decomposing water to produce molecular oxygen and hydrogen, and the like. More specifically, the present invention relates to a method of using an aromatic amine polymer as an oxidation catalyst for generating oxygen from water (which will hereinafter be called "water-oxidation oxygen-generation catalyst") to form a conductive thin plate or conductive nonwoven fabric composed of the aromatic amine polymer, immersing the thin plate or non-woven fabric, which is used as an electrode, in hydroxide ion-containing water, and applying a voltage and/or irradiating with light to produce oxygen; a method of using a polyarylenevinylene as a reducing catalyst for generating hydrogen from water (which will hereinafter be called "water-reduction·hydrogen-generation catalyst") to form a conductive thin-plate or conductive non-woven fabric composed of the polyarylenevinylene, immersing the thin plate or non-woven fabric, which is used as an electrode, in hydrogen ion-containing water, and applying a voltage to produce hydrogen; and a method of using the aforesaid water-oxidation·oxygen-generation catalyst and the aforesaid water-reduction·hydrogen-generation catalyst in combination, immersing these catalysts in an aqueous electrolyte solution, applying a voltage and/or irradiating the water-oxidation·oxygen-generation catalyst with light to produce oxygen and hydrogen.

### Background Art

Molecular oxygen has widely been used in an oxidation production step, such as epoxidation, of a petrochemical product and also used for combustion efficiency improvement, waste disposal treatment using an aerobic microorganism, marine product industry such as fish culture, medical care for respiratory failure, and the like. It is a general-purpose chemical product which is indispensable and is most heavily produced and used. Molecular oxygen is produced in a large scale by an air cryogenic distillation method and in a medium or small scale by an air pressure swing separation or membrane separation method. On the other hand, molecular hydrogen has not only been used widely on an industrial scale in ammonia synthesis, petroleum refining, iron manufacture, and the like but also been used practically as a clean energy source or a fuel for fuel cells because it discharges only water even when burned. Molecular hydrogen is produced mainly in a large-scale facility by steam reforming of methane or coal gasification, but the development of a hydrogen production method not depending on fossil resources and not emitting carbon dioxide in near future is expected. In other words, there is an eager demand for the development of a highly efficient method for producing oxygen and hydrogen by means of water deomposition as an environmetally suitable production method on a using site.

A water electrolysis method is one of such oxygen and hydrogen production methods. Particularly, technologies of using surplus power from wind power or solar power generation for storage and leveling as a fuel for hydrogen to be produced by water decomposition and using oxygen generated simultaneously therewith on site are highly requested technologies. As the water electrolysis method, water electrolysis using a proton exchange polymer film under acidic conditions and alkaline water decomposition are performed, but in either electrolysis, an overpotential required for electrolysis cannot be said low. There is a strong industrial demand for further development of an electrode catalyst that consumes lower power consumption, is less expensive, and has higher durability. An extremely large amount of research has been made on the industrial use and development of catalysts and electrodes thereof used for water-reduction·hydrogen-generation such as platinum, platinum-based catalysts, nickel, and transision metal catalysts, but along with electrode catalysts for metal-air batteries that have recently undergone significant development, development of water-oxidation·oxygen-generation catalysts and electrodes thereof that complement the aforesaid reaction are very important.

Typical examples of water-oxidation·oxygen-generation catalysts to be used for water electrolysis include noble metal oxices such as rutherium oxide and iridium oxide at present. Further, metal oxides having a spinel type, perovskite type, or rock salt type structure such as manganese oxide, cobalt oxide, and iron nickel oxide have been developed (Non-Patent Document 1). In addition to a polynuclear manganese complex, serving as an oxygen-generation catalyst in a natural photosynthetic reaction, on which basic research is being performed (Non-Patent Document 2), a number of metal oxides and complexes are under development and research is included,.

They act as a catalyst of the reaction that produces one oxygen molecule and four protons by the oxidation of two water molecules and four electrons but known catalysts do not always have high stability in water, particularly, in an acidic or alkaline aqueous solution.

In addition, an overpotential required for applying a voltage to an electrode composed of such a catalyst and electrolyzing water is 0.3 V to 0.6 V and is not low. Although an increase in oxygen generation rate per area is intended by devising the shape of the electrode, the current density of the catalyst itself is 0.1 to several mA/cm2 and the catalyst is required to have higher catalyst performance. As a metal-free catalyst for the aforesaid purpose, carbon-based materials such as graphene, nitrogen-doped carbon, and carbon nitride have been studied, but they have not yet achieved a high catalyst activity nor they have achieved sufficient formability and stability as an electrode (Non-Patent Document 3).

On the other hand, a 'method of generating oxygen from water with an organic polymer as an oxidation catalyst' is expected to provide an unknown catalyst function, forming ability, or durability, but not many reports on it have been found yet. One of the few examples reported is oxygen generation at a current density of several mA/cm² when an electrode formed by impregnating a carbon nonwoven fabric with a polyimide is immersed in an aqueous solution of pH 13, and a voltage of 1.7 V is applied thereto (versus reversible hydrogen electrode) (Non-Patent Document 4).

On the other hand, as a water-reduction·hydrogen-generation electrode to be provided for water electrolysis, platinum is a typical example and in addition, noble metals such as palladium and iridium and relatively inexpensive nickel and nickel/cobalt/iron alloy are used in practice, though they are inferior in performance. Many development studies have been made on the transition metal catalysts usable for alkaline electrolysis capable of avoiding corrosion and acid steam caused by acidic electrolysis (Non-Patent Document 5). As a metal-free catalyst used for the aforesaid purpose, carbon-based materials such as nitrogen-doped carbon have been studied, but their catalytic activity is not high (Non-Patent Document 6). There is therefore a demand for the development of catalyst materials which are not limited by their resources, are inexpensive, and have high durability.

The present inventors have been studying organic aromatic polymers having redux capacity and their function for many years (Non-Patent Documents 7 and 8). They have recently reported that a thin layer of a thiophene polymer formed on a conductive plate acts on the photoelectrochemical water decomposition and hydrogen generation (Non-Patent Documents 9 and 10, and Patent Document 1).

### Citation List

### Patent Document

Patent Document 1: Hiroyuki Nishide, et al., "Method for producing hydrogen", Japanese Patent Application No. 2020-065878

### Non-Patent Documents

Non-Patent Document 1: Suen, N-T., et al. Chem. Soc. Rev. 46, 337-365 (2017).
Non-Patent Document 2: Park, S., et al. Energy Environ. Sci. 13, 2310-2340 (2020).
Non-Patent Document 3: Zhao, Y. et al. Nat. Commun. 4, 2390 (2013).
Non-Patent Document 4: Lin, Y. et al. Angew. Chem. 57, 12563-12566 (2018).
Non-Patent Document 5: Mahmood, N., et al. Adv. Sci. 5, 1700464 (2018).
Non-Patent Document 6: Hu, C., et al. Energy Environ. Sci. (2019).
Non-Patent Document 7: Oyaizu, K., Nishide, H. Handbook of Conjugated Polymers, CRC Press, 587-594 (2019).
Non-Patent Document 8: Oka, K., Nishide, H. Redox Polymer for Energy and Nanomedicine, Royal Soc. Chem. 137-165 (2020).
Non-Patent Document 9: Oka, K. et al. Energy Environ. Sci. 11, 1335-1342 (2018).
Non-Patent Document 10: Oka, K. et al. Adv. Energy Mater. 9, 1803286 (2019).

### Summary of the Invention

### Problem to be Solved by the Invention

A purpose is to provide a technology capable of producing either or both of oxygen and hydrogen from water with a higher production rate by immersing an electrode, which is made as a water-oxidation and water-reduction catalyst by using a specific aromatic polymer having high durability, being inexpensive, and having formability into various shapes including application into a thin layer, in water, applying a considerably low overpotential to the electrode, and irradiating the water-oxidation catalyst electrode with light.

### Means for solving the Problems

Based on the findings of the present inventors on organic aromatic polymers, photo-electrochemistry, and chemistry of water decomposition and experimental approaches thereto (Non-Patent Documents 8 to 10), which findings are leading ones at home and abroad, they widely searched a series of aromatic polymers and carried out extensive researches, with a view to developing a highly efficient and simple method for producing molecular oxygen and hydrogen from water. As a result, based on the finding of the present inventors that an aromatic amine polymer acts as an oxidation catalyst for generating oxygen from water and a polyarylenevinylene acts as a reduction catalyst for generating hydrogen from water, they have completed the present invention, which produces either or both of oxygen and hydrogen with a high production rate by applying a slight overpotential to respective conductive thin plates or conductive non-woven fabrics made as electrodes from these catalysts and/or irradiating the water-oxidation·oxygen-generation electrode with light. The aromatic amine polymer and polyarylenevinylene provide, as organic polymers, such unique advantages as (1) they can be obtained at low cost without resource constraints, (2) they have considerably high chemical durability in water over a wide pH range, (3) they can be coated as a thin layer catalyst on the surface of various current collecting substrates with high adhesion properties and give mechanical toughness to the substrates, (4) they can provide an electrode in film form, bellows form, or fiber form, and (5) they can control the reaction termination caused by adhesion of oxygen and hydrogen air bubbles generated one after another by changing their molecular design such as hydrophilicity/hydrophobicity or surface roughness of the polymer layer.

Described specifically, the present invention provides a method for producing molecular oxygen and hydrogen, including using an electrode made using an aromatic amine polymer as an oxidation catalyst for generating molecular oxygen from water and/or an electrode made using a polyarylenevinylene as a reduction catalyst for generating hydrogen from water and also including immersing, in a hydroxide ion-containing water, a combination of one of the aforesaid two electrodes with an existing hydrogen-generation electrode or oxygen-generation electrode to form a pair or a combination of the aforesaid two electrodes and applying a voltage and/or irradiating the oxygen-generation catalyst electrode with light.

The present invention also provides, in obtaining a poly(triphenylamine) which is a typical example of an aromatic amine polymer, a method for synthesizing a poly(triphenylamine) by applying a triphenylamine, a starting material, to a conductive thin plate or conductive nonwoven fabric and exposing the resulting thin plate or nonwoven fabric to iodine vapor or adding iodine to a triphenylamine solution to cause an oxidative polymerization reaction.

More specifically, the present invention provides a method for producing oxygen and hydrogen from water by immersing, in water, an aromatic amine polymer as a catalyst for generating oxygen by oxidation of water (which catalyst will hereinafter be called "water-oxidation·oxygen-generation catalyst) and a polyarylenevinylene or derivative thereof as a catalyst for generating hydrogen by reduction of water (which catalyst will hereinafter be called "water-reduction·hydrogen-generation catalyst"); connecting the water-oxidation·oxygen-generation catalyst and the water-reduction hydrogen-generation catalyst to each other with a conductive wire; and applying a voltage and/or irradiating the water-oxidation·oxygen-generation catalyst with light.

The method of the present invention for producing oxygen and hydrogen from water may be a method for producing oxygen and hydrogen wherein the aromatic amine polymer is represented by the following formula (I): 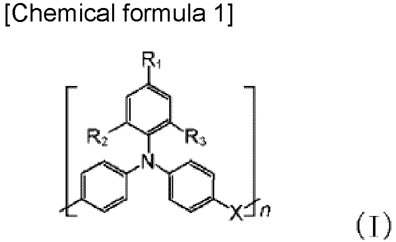 (wherein,
n represents an integer,
R1 represents -H, an alkyl group, a phenyl group, a halogen group, an ether group, a carbazole group, a triphenylamine group, a nitro group, an acetylenyl group, a thienyl group, an amino group, a formyl group, or a boron group,
R2 and R3 are the same or different and each represent -H or an alkyl group, and
X does not exist or represents a fluorene group).

The method of the present invention for producing oxygen and hydrogen from water may be a method for producing oxygen and hydrogen wherein the aforesaid polyarylenevinylene is a poly(phenylenevinylene) represented by the following formula (II): 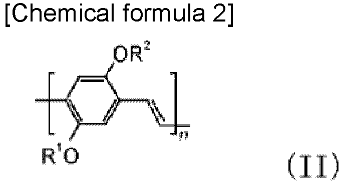 (wherein, n represents an integer,
R1 and R2 are the same or different and each represent an alkyl group).

The present invention also provides a method for producing oxygen including immersing, in water, an aromatic amine polymer as a catalyst for generating oxygen by oxidation of water (which catalyst will hereinafter be called "water-oxidation·oxygen-generation catalyst"), and applying a voltage and/or irradiating with light.

The present invention further provides a water-oxidation·oxygen-generation catalyst for use in the aforesaid method for producing oxygen and hydrogen and the aforesaid method for producing oxygen, wherein the aromatic amine polymer is a poly(triphenylamine) represented by the following formula (III): 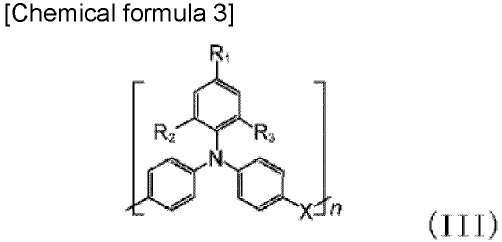 (wherein, n represents an integer,
R1 represents -H, an alkyl group, a phenyl group, a halogen group, an ether group, a carbazole group, a triphenylamine group, a nitro group, an acetylenyl group, a thienyl group, an amino group, a formyl group, or a boron group,
R2 and R3 are the same or different and each represent -H or an alkyl group, and
X does not exist or represents a fluorene group).

The present invention further provides a method for producing the water-oxidation·oxygen-generation catalyst, including: applying a triphenylamine represented by the following formula (IV) onto a conductive thin plate or a conductive nonwoven fabric and exposing the resulting thin plate or nonwoven fabric to iodine vapor or adding iodine to a solution of the triphenylamine to cause an oxidative polymerization reaction and thereby obtain the poly(triphenylamine): 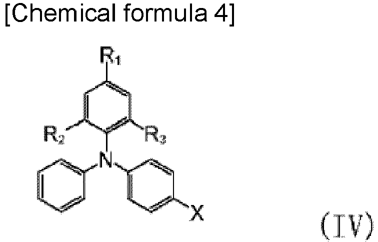 (wherein,
R1 represents -H, an alkyl group, a phenyl group, a halogen group, an ether group, a carbazole group, a triphenylamine group, a nitro group, an acetylenyl group, a thienyl group, an amino group, a formyl group, or a boron group,
R2 and R3 are the same or different and each represent -H or an alkyl group, and
X represents -H or a fluorene group).

In the method of the present invention for producing the water oxidation·oxygen-generation catalyst, the catalyst may be formed as a thin layer of the aromatic amine polymer on the conductive thin plate or the conductive nonwoven fabric or as a thin plate composed of the aromatic amine polymer and a conductive assistant.

The present invention further provides a method for producing hydrogen including immersing, in water, a polyarylenevinylene or a derivative thereof as a catalyst for generating hydrogen by reduction of water (which catalyst will hereinafter be called "water-reduction-hydrogen-generation catalyst") and applying a voltage.

The present invention further provides a water-reduction·hydrogen-generation catalyst which is a water-reduction hydrogen-generation catalyst for use in the aforesaid method for producing oxygen and hydrogen and the aforesaid method for producing hydrogen, wherein the polyarylenevinylene is a poly(phenylenevinylene) represented by the following formula (V): 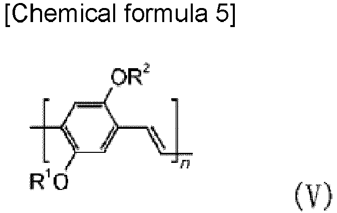 (wherein,
n represents an integer, and
R1 and R2 are the same or different and each represent an alkyl group).

The present invention further provides a method for producing the water-reduction·hydrogen-generation catalyst which is a method for producing a water-reduction·hydrogen-generation catalyst including forming a thin layer of the polyarylenevinylene or derivative thereof on a conductive thin plate or a conductive nonwoven fabric or forming a thin plate composed of the polyarylenevinylene or derivative thereof and a conductive assistant.

### Advantageous Effect of the Invention

The present invention makes it possible to provide an oxygen and/or hydrogen production technology that is novel, convenient, and environmentally suitable, and decomposes water at a high rate.

### Brief Description of the Drawings

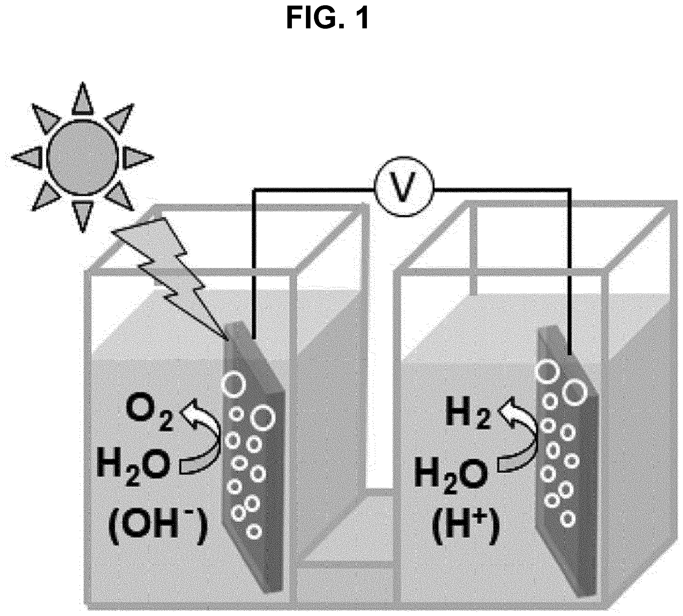

FIG. 1 shows a simple reaction tank having, in water, a conductive plate formed using a water-oxidation·oxygen-generation catalyst and a conductive plate formed using a water-reduction·hydrogen-generation catalyst, which plates are connected to each other with a conductive wire (including the case where a platinum coil is used as one of the conductive plates).

### Modes for carrying out the Invention

### 1. Method for producing oxygen and/or hydrogen

One of the embodiments of the present invention is a method of decomposing water to produce oxygen and/or hydrogen.

More specifically, the method for producing oxygen and hydrogen is a method for producing oxygen and hydrogen from water by using a water-oxidation·oxygen-generation catalyst typified by an aromatic amine polymer and a water-reduction/ catalyst that generates hydrogen from water and is typified by a polyarylenevinylene in combination, for example, by connecting them to each other with a conductive wire; and applying a voltage to them and/or irradiating the water-oxidation·oxygen-generation catalyst with light.

The method for producing oxygen and hydrogen will next be described referring to FIG. 1. An oxygen gas is generated in a chamber of a left compartment having therein a conductive plate composed of a water-oxidation·oxygen-generation catalyst and a hydrogen gas is generated in a chamber of a right compartment having therein a conductive plate composed of a water-reduction·hydrogen-generation catalyst. The both chambers are opened toward each other at the lower portion thereof and water provided is used in common. The water oxidation reaction and the water reduction reaction compensate for each other and a voltage is applied as needed. Irradiation of the water-oxidation·oxygen-generation catalyst with light leads to a reduction in the applied voltage.

The method for producing oxygen is a method for producing oxygen from water by using a water-oxidation·oxygen-generation catalyst typified by an aromatic amine polymer and applying a voltage and/or irradiating the water-oxidation·oxygen-generation catalyst with light.

The method for producing hydrogen is a method for producing hydrogen from water by using a water-reduction catalyst that generates hydrogen from water and is typified by a polyarylenevinylene and applying a voltage thereto.

The present invention will hereinafter be described in more detail.

### (1) Aromatic amine polymer which will be a water-oxidation·oxygen-generation catalyst

The starting point of the present invention is the finding of the present inventors that an aromatic amine polymer which is known as a polymer material having a hole transporting property and has partially been used in practice as a hole transporting layer or film for organic EL, organic transistor, and photoelectric transducer serves not as a hole transporting material in such dry elements or devices but as a catalyst which is brought into contact with water in a wet state and oxidizes a water molecule to generate an oxygen gas.

The aromatic amine polymer which will be a water-oxidation·oxygen-generation catalyst is represented by the following formula I: 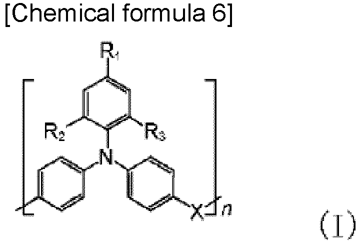 (wherein,
n represents an integer,
R1 represents -H, an alkyl group, a phenyl group, a halogen group, an ether group, a carbazole group, a triphenylamine group, a nitro group, an acetylenyl group, a thienyl group, an amino group, a formyl group, or a boron group,
R2 and R3 are the same or different and each represent -H or an alkyl group, and
X does not exist or represents a fluorene group).

In the formula (I), the "alkyl group" is preferably a C1 to C6 alkyl group, more preferably C1 to C3 alkyl group, and most preferably a methyl group.

It is presumed that in this polymer composed of an aromatic tertiary amine, the tertiary amine itself and a quaternary ammonium cation radical (corresponding to a hole) obtained by one electron oxidation are both chemically stable because of a resonance effect of three aromatic rings and steric protection and the potential (0.32 V versus Ag/AgCl electrode) of the cation radical is more positive (more noble) than the oxidation potential (0.2 to 0.3 V) of water under the same conditions so that it functions for oxidation of water and at the same time, returns to the tertiary amine and is therefore catalytically effective for the oxidation of water in repetition. Since in the polymer amine, a lot of catalyst points of this amine/ammonium cation radical are present at high density, this enables four-electron oxidation (Formula 1) necessary for the water-oxidation·oxygen-generation reaction.

2H2O → O2 + 4H+ + 4e- (1)

Further, when the aromatic amine polymer has a high optical absorption coefficient, water decomposition can be assisted by light irradiation.

### (2) Polyarylenevinylene and derivative thereof which will be a water-reduction·hydrogen-generation catalyst

Examples of the polyarylenevinylene and derivative thereof which will be a water-reduction hydrogen-generation catalyst include a polymer represented by the following formula (II): 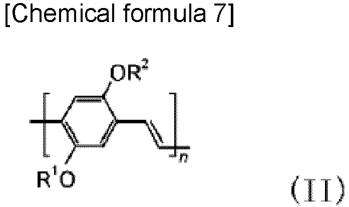 (wherein,
n represents an integer, and
R1 and R2 are the same or different and each represent an alkyl group).

In the formula (II), the alkyl group is preferably a molecular or linear C1 to C12 alkyl group. More preferably, R1 represents a substituent represented by the following formula (IIa) or (IIb) and R2 represents a methyl group.

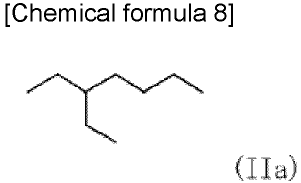

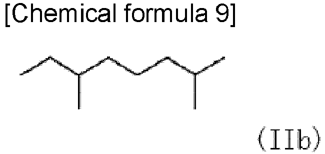

The finding of the present inventors that the vinylene group of the aforesaid polyarylenevinylene acts as a catalyst that reduces a water molecule or proton to generate a hydrogen gas is the second starting point of the present invention. It is presumed that the vinylene group is dehydrogenated into an ethynylene group and due to this conversion between them, it acts as a two-electron reduction catalyst.

### (3) Method of making a conductive substrate

The water-oxidation·oxygen-generation catalyst is obtained by forming a thin layer of the aforesaid aromatic amine polymer on a conductive thin plate or nonwoven fabric or obtained as a thin plate composed of the aromatic amine polymer and a conductive assistant. It is also obtained as a poly(triphenylamine) thin layer formed by applying a triphenylamine onto a conductive thin plate or nonwoven fabric and then exposing the resulting plate or fabric to iodine vapor to cause an oxidative polymerization reaction.

The water-reduction hydrogen-generation catalyst is obtained as a thin layer of a polyarylenevinylene or derivative thereof formed on a conductive thin plate or nonwoven fabric or as a thin plate composed of a polyarylenevinylene or a derivative thereof and a conductive assistant.

Usable examples of the conductive thin plate include glassy carbon, carbon paper, conductive glass, and conductive plastic film, those of the conductive nonwoven fabric include carbon felt, and those of the conductive assistant include carbon fiber and carbon nanotube.

### 2. Water-oxidation oxygen-generation catalyst and production method thereof

Another embodiment of the present invention is a water-oxidation·oxygen-generation catalyst produced using an aromatic amine polymer and a production method of the catalyst.

More specifically, in the water-oxidation·oxygen-generation catalyst, the aromatic amine polymer is a poly(triphenylamine) represented by the following formula (III): 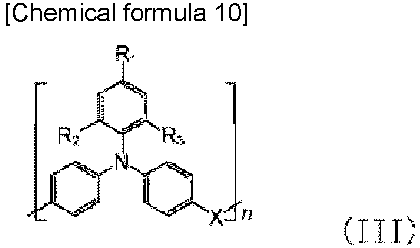 (wherein,
n represents an integer,
R1 represents -H, an alkyl group, a phenyl group, a halogen group, an ether group, a carbazole group, a triphenylamine group, a nitro group, an acetylenyl group, a thienyl group, an amino group, a formyl group, or a boron group,
R2 and R3 are the same or different and each represent -H or an alkyl group, and
X does not exist or represents a fluorene group).

The method for producing a water-oxidation·oxygen-generation catalyst includes applying a triphenylamine represented by the following formula (IV) onto a conductive thin plate or conductive nonwoven fabric, exposing the thin plate or nonwoven fabric to iodine vapor or adding iodine to a solution of the triphenylamine to cause an oxidative polymerization reaction, and thereby obtaining the poly(triphenylamine). 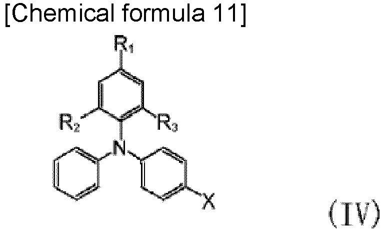 (wherein,
R1 represents -H, an alkyl group, a phenyl group, a halogen group, an ether group, a carbazole group, a triphenylamine group, a nitro group, an acetylenyl group, a thienyl group, an amino group, a formyl group, or a boron group,
R2 and R3 are the same or different and each represent -H or an alkyl group, and
X represents -H or a fluorene group).

In the method for producing a water-oxidation·oxygen-generation catalyst according to the present invention, the water-oxidation·oxygen-generation catalyst can be produced by forming a thin layer of an aromatic amine polymer on a conductive thin plate or conductive nonwoven fabric or forming a thin plate composed of an aromatic amine polymer and a conductive assistant.

Usable examples of the conductive thin plate include glassy carbon, carbon paper, conductive glass, and conductive plastic film, those of the conductive nonwoven fabric include carbon felt, and those of the conductive assistant include carbon fiber and carbon nanotube.

Oxygen can be produced from water by using the water-oxidation·oxygen-generation catalyst of the present invention, immersing it in water, applying a voltage and/or irradiating the water-oxidation·oxygen-generation catalyst with light.

### 3. Water-reduction hydrogen-generation catalyst and production method thereof

A further embodiment of the present invention is a water-reduction·hydrogen-generation catalyst and a production method thereof.

The water-reduction hydrogen-generation catalyst of the present invention is a water-reduction hydrogen-generation catalyst to be used in the aforesaid method for producing oxygen and/or hydrogen and it is a water-reduction·hydrogen-generation catalyst in which the polyarylenevinylene is a poly(phenylenevinylene) represented by the following formula (V): 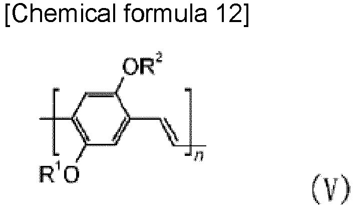 (wherein,
n represents an integer and
R1 and R2 are the same or different and each represent an alkyl group).

The method for producing the water-reduction hydrogen-generation catalyst according to the present invention includes forming a thin layer of a polyarylenevinylene or derivative thereof on a conductive thin plate or conductive nonwoven fabric or by forming a thin plate composed of a polyarylenevinylene or derivative thereof and a conductive assistant.

Usable examples of the conductive thin plate include glassy carbon, carbon paper, conductive glass, and conductive plastic film, those of the conductive nonwoven fabric include carbon felt, and those of the conductive assistant include carbon fiber and carbon nanotube.

Hydrogen can be produced from water by immersing the water-reduction catalyst of the present invention in water and applying a voltage thereto.

The present invention will hereinafter be described in detail by Examples. All the documents referred to herein are incorporated herein by reference in its entirety. Examples described below exemplify the embodiments of the present invention and they are not construed as limiting the scope of the present invention.

### Example 1

### <Production of an oxygen gas using 4-nitrotriphenylamine polymer>

### (1) Polymerization of 4-nitrotriphenylamine by iodine vapor on a glassy carbon thin plate

4-Nitrotriphenylamine (100 mg, product of Tokyo Chemical Industry, Product Code: N0831) was dissolved in 10 mL of chlorobenzene and 4 mL of the resulting solution was spin coated (at 3000 rpm for 3 seconds, 30 seconds, and then, 3 seconds) on a 5-cm square of a glassy carbon thin plate (product of ALLIANCE Biosystems Inc.). The resulting thin plate was placed in a bell jar, hermetically closed along with 0.5 g of iodine placed in another petri dish, and heated at 70°C for 2 hours. The 4-nitrotriphenylamine-applied surface of the thin plate was annealed in a heating dryer at 120°C for 2 hours and then washed three times with 50 mL of chlorobenzene.

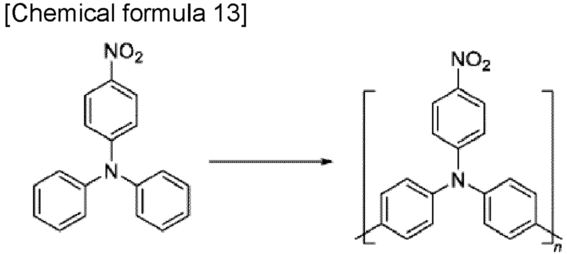

With respect to ultraviolet, visible, and infrared absorption, the layer formed by application had a strong absorption band in an optical wavelength region of 300 to 600 nm and had no absorption in a near infrared region, showing that the polymer thus obtained was an undoped and pure triphenylamine polymer.

4-Nitrotriphenylamine (100 mg, product of Tokyo Chemical Industry, Product Code: N0831) and 0.5 g of iodine were dissolved in 10 mL of chlorobenzene and the resulting solution was stirred under heat at 70°C for 2 hours. As a result of the mass spectrometry, with gel permeation chromatography, of a solvent-soluble portion of the polymer thus synthesized by the above solution polymerization, the maximum molecular weight was 3,200. In Raman spectrometry (excited wavelength: 785 nm), a strong absorption was found at 852 cm-1, supporting the formation of a linear polymer. The measurement (measurement from 4° in an oblique incidence parallel method) using a highly versatile multifunctional X-ray diffractometer (RINT-Ultima III, product of Rigaku Corporation) showed the formation of an amorphous polymer in a wide spectrum.

The highest occupied orbital level of the thin layer was calculated to be -5.4 eV as a result of the photoemission yield spectroscopy in air. Further, the lowest unoccupied orbital level was found to be -3.2 eV from the band gap calculated from the ultraviolet absorption spectrum.

### (2) Production of oxygen by light irradiation and voltage application

The 5-cm square glassy carbon thin plate coated with a thin layer of a triphenylamine polymer obtained by the polymerization of 4-nitrotriphenylamine with iodine vapor was connected to a platinum coil electrode with a copper wire and the resulting product was placed in a water tank having two compartments as shown in FIG. 1. The water tank was filled with 60 mL of an aqueous potassium hydroxide solution having a pH of 14. A voltage of + 0.80 V vs. Ag/AgCl (used as a reference electrode, overpotential: 0.4 V) was applied, followed by irradiation with light (simulated solar light, irradiance: 1000 W/m2, product of Asahi Spectra) to produce oxygen.

The amount of oxygen thus produced was determined by gas chromatography and an oxygen concentration meter (product of PreSens, Product No. pH-1 SMA LG1).

Oxygen gases (10.4, 26.0, and 51.5 mL) were produced 2, 5, and 10 hours, respectively, after voltage application and light irradiation were started.

### Example 2

### <Production of an oxygen gas using poly[bis(4-phenyl)(2,4,6-trimethylphenyl)amine] (commercially available product)>

Poly[bis(4-phenyl)(2,4,6-trimethylphenyl)amine] (100 mg, product of Sigma Aldrich, Product Code: 702471) was dissolved in 10 mL of chlorobenzene. The resulting solution (2 mL) was spin-coated (at 3000 rpm for 3 seconds, 30 seconds, and then, 3 seconds) to a 5-cm square glassy carbon thin plate (product of ALLIANCE Biosystems Inc.). The resulting thin plate was then annealed at 120°C for 2 hours in a heating dryer.

Oxygen was produced as in Example 1. Five hours after voltage application and light irradiation were started, 22.3 mL of an oxygen gas was produced.

### Example 3

### <Production of oxygen from a 4-nitrotriphenylamine polymer only by using voltage application>

Oxygen was produced by using a 4-nitrotriphenylamine polymer as in Example 1 and conducting only voltage application. Five hours after the voltage application was started, 14.5 mL of an oxygen gas was produced.

### Example 4

### <Production of a hydrogen gas from poly[2-methoxy-5-(3',7'-dimethyloctyloxy)-1,4-phenylenevinylene]>

Poly[2-methoxy-5-(3',7'-dimethyloctyloxy)-1,4-phenylenevinylene] (50 mg, product of Sigma Aldrich, Product Code: 546461) was dissolved in 10 mL of chlorobenzene. With the resulting solution, a 5-cm square carbon felt (product of EC Frontier) was impregnated, followed by annealing at 120°C for 2 hours in a heating dryer.

The resulting poly(phenylenevinylene) sheet was connected to a platinum coil electrode with a copper wire and placed in a water tank having two compartments as shown in FIG. 1. The water tank was filled with 60 mL of an aqueous sulfuric acid solution having a pH of 1. A voltage of - 0.4 V vs. Ag/AgCl (used as a reference electrode, overpotential: 0.35 V) was applied to produce hydrogen. The amount of the hydrogen thus produced was determined by gas chromatography. One hour after the voltage application was started, 104 mL of a hydrogen gas was produced.

### Example 5

### <Production of a hydrogen gas from poly[2-methoxy-5-(2-ethylhexyloxy)-1,4-phenylenevinylene]>

In a manner similar to that of Example 4 except for the use of poly[2-methoxy-5-(2-ethylhexyloxy)-1,4-phenylenevinylene] (product of Sigma Aldrich, Product Code: 541443) instead of poly[2-methoxy-5-(3',7'-dimethyloctyloxy)-1,4-phenylenevinylene], hydrogen was produced. As a result, five hours after the voltage application was started, 97.2 mL of a hydrogen gas was produced.

### Example 6

An oxygen gas and a hydrogen gas were produced by connecting the 5-cm square glassy carbon thin plate of Example 1 obtained by coating with a thin layer of a triphenylamine polymer and the poly(phenylenevinylene) sheet of Example 5 to each other with a copper wire, placing the resulting product in a water tank having 2 compartments as shown in FIG. 1, filling the water tank with 60 mL of an aqueous potassium hydroxide solution having a pH of 14, and applying a voltage of 2.1 V. The amount of the hydrogen gas thus produced was determined by gas chromatography. Two hours after the voltage application was started, 9.6 mL of the oxygen gas and 18.8 mL of the hydrogen gas were produced.

## Claims

1. A method for producing oxygen and hydrogen from water, comprising:
immersing, in water, an aromatic amine polymer as a catalyst for generating oxygen by oxidation of water (which catalyst will hereinafter be called "water-oxidation oxygen-generation catalyst") and a polyarylenevinylene or derivative thereof as a catalyst for generating hydrogen by reduction of water (which catalyst will hereinafter be called "water reduction-hydrogen-generation catalyst"); connecting the water-oxidation·oxygen-generation catalyst and the water-reduction·hydrogen-generation catalyst to each other with a conductive wire; and applying a voltage and/or irradiating the water-oxidation·oxygen-generation catalyst with light.

2. The method for producing oxygen and hydrogen according to Claim 1, wherein the aromatic amine polymer is represented by the following formula (I): 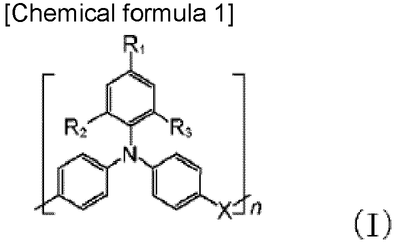 (wherein,
n represents an integer,
R1 represents -H, an alkyl group, a phenyl group, a halogen group, an ether group, a carbazole group, a triphenylamine group, a nitro group, an acetylenyl group, a thienyl group, an amino group, a formyl group, or a boron group,
R2 and R3 are the same or different and each represent -H or an alkyl group, and
X does not exist or represents a fluorene group).

3. The method for producing oxygen and hydrogen according to Claim 1 or 2, wherein the polyarylenevinylene is a poly(phenylenevinylene) represented by the following formula (II): 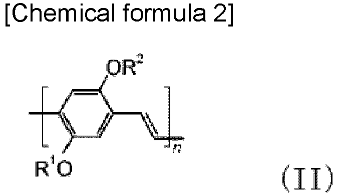 (wherein, n represents an integer,
R1 and R2 are the same or different and each represent an alkyl group).

4. A method for producing oxygen, comprising: immersing, in water, an aromatic amine polymer as a catalyst for generating oxygen by oxidation of water (which catalyst will hereinafter be called "water-oxidation·oxygen-generation catalyst"); and applying a voltage and/or irradiating with light.

5. A water-oxidation·oxygen-generation catalyst for use in the method for producing oxygen and hydrogen as claimed in Claims 1 to 3 and the method for producing oxygen as claimed in Claim 4, wherein the aromatic amine polymer is a poly(triphenylamine) represented by the following formula (III): 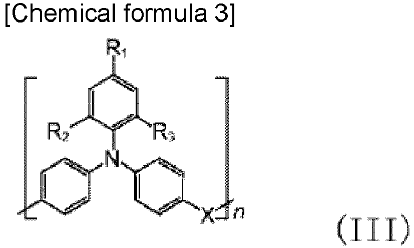 (wherein, n represents an integer,
R1 represents -H, an alkyl group, a phenyl group, a halogen group, an ether group, a carbazole group, a triphenylamine group, a nitro group, an acetylenyl group, a thienyl group, an amino group, a formyl group, or a boron group,
R2 and R3 are the same or different and each represent -H or an alkyl group, and
X does not exist or represents a fluorene group).

6. A method for producing the water-oxidation·oxygen-generation catalyst as claimed in Claim 5, comprising: applying a triphenylamine represented by the following formula (IV) onto a conductive thin plate or a conductive nonwoven fabric and exposing the resulting thin plate or nonwoven fabric to iodine vapor or adding iodine to a solution of the triphenylamine to cause an oxidative polymerization reaction and thereby obtain the poly(triphenylamine): 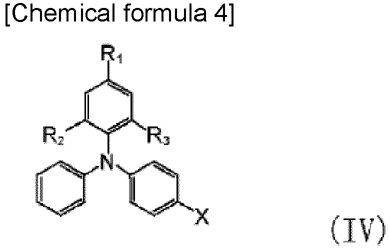 (wherein,
R1 represents -H, an alkyl group, a phenyl group, a halogen group, an ether group, a carbazole group, a triphenylamine group, a nitro group, an acetylenyl group, a thienyl group, an amino group, a formyl group, or a boron group,
R2 and R3 are the same or different and each represent -H or an alkyl group, and
X represents -H or a fluorene group).

7. The production method according to Claim 6, wherein a thin layer of the aromatic amine polymer is formed on the conductive thin plate or the conductive nonwoven fabric or a thin plate composed of the aromatic amine polymer and a conductive assistant is formed.

8. A method for producing hydrogen, comprising: immersing, in water, a polyarylenevinylene or a derivative thereof as a catalyst for generating hydrogen by reduction of water (which catalyst will hereinafter be called "water-reduction·hydrogen-generation catalyst"); and applying a voltage.

9. A water-reduction hydrogen-generation catalyst for use in the method for producing oxygen and hydrogen as claimed in Claims 1 to 3 and the method for producing hydrogen as claimed in Claim 8, wherein the polyarylenevinylene is a poly(phenylenevinylene) represented by the following formula (V): 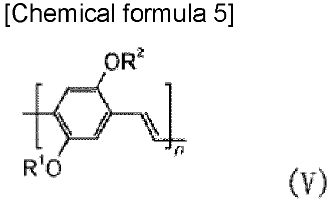 (wherein,
n represents an integer, and
R1 and R2 are the same or different and each represent an alkyl group).

10. A method for producing the water-reduction hydrogen-generation catalyst as claimed in Claim 9, comprising: forming a thin layer of the polyarylenevinylene or derivative thereof on a conductive thin plate or a conductive nonwoven fabric or forming a thin plate composed of the polyarylenevinylene or derivative thereof and a conductive assistant.
